# EUROPEAN PATENT SPECIFICATION

(11) **EP 2 925 512 B1**
(45) Date of publication and mention of the grant of the patent: **08.08.2018**
(21) Application number: 13805589.2
(22) Date of filing: 18.11.2013
(51) Int. Cl.: B29D 30/24, B29D 30/32

(54) **PROCESS AND APPARATUS FOR BUILDING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL DE CONFECTION DE PNEUS POUR ROUES DE VÉHICULE

(30) Priority: 27.11.2012 IT MI20122010; 29.11.2012 US 201261731256 P
(43) Date of publication of application: 07.10.2015
(73) Proprietor: Pirelli Tyre S.p.A., 20126 Milano (IT)
(72) Inventor: MISANI, Pierangelo, I-20126 Milano (IT); VERCESI, José Ricardo, 09111-310 São Paulo (BR); BARBOZA DE SANTANA, Samuel, 09111-310 São Paulo (BR); BRAGHIERI, Luigi, 09111-340 São Paulo (BR)
(74) Representative: Tirloni, Bartolomeo
(86) International application number: PCT/IB2013/060210
(87) International publication number: WO 2014/083477

(56) References cited:
- EP-A1- 2 431 163
- EP-A2- 0 997 263
- WO-A1-2006/058599
- WO-A1-2008/099236
- DE-A1-102009 025 759
- DE-B1- 1 579 301
- US-A- 2 084 009
- US-A- 5 209 797

## Description

The present invention has as object a process and an apparatus for building tyres for vehicle wheels.

A tyre for vehicle wheels generally comprises a carcass structure comprising at least one carcass ply having respectively opposite terminal zones engaged in respective annular anchoring structures, normally termed "bead cores", integrated in the zones usually identified with the name of "beads", having an internal diameter substantially corresponding with a so-called "fitting diameter" of the tyre on a respective mounting rim.

In radially outer position relative to the carcass structure, a belt structure can be associated comprising one or more belt layers, situated in radial superimposition with respect to each other and with respect to the carcass structure, having textile or metallic reinforcement cords with cross orientation and/or substantially parallel to the circumferential extension direction of the tyre. In radially outer position relative to the belt structure, a tread band is applied, also made of elastomeric material like other semi-finished products constituting the tyre. On the lateral surfaces of the carcass structure, each extending from one of the lateral edges of the tread band up to the respective annular structure for anchoring to the beads, respective sidewalls made of elastomeric material are also applied. The document EP0461646, on behalf of the same Applicant, illustrates a process for building tyres for high-performance two-wheel vehicles comprising: obtaining a cylindrical sleeve, applying annular reinforcement structures at the axial ends of the sleeve, turning up said axial ends around the annular reinforcement structures and toroidally conforming the sleeve itself. A belt structure made of cord turns is applied on a crown portion of the toroidally-conformed sleeve and a tread band is superimposed on the belt structure. The toroidal configuration is obtained by expanding the cylindrical sleeve and moving the annular reinforcement structures, anchored at the ends, towards each other along an axial direction.

The document EP1674248 illustrates a drum and a method for building tyres. The drum comprises a central section formed by a plurality of circular sectors that are radially and axially movable and two axially movable shoulders. The shoulders comprise mechanisms for locking the cores of the beads. The method provides for applying one or more carcass layers, positioning the cores of the beads, locking the cores through locking mechanisms, moving the central section radially outward while the locking mechanisms are moved axially towards each other, turning up terminal zones of the carcass around the cores, inflating the carcass in order to toroidally shape it, applying the tread band and reinforcement structures.

The document US3765987 illustrates a method and an apparatus for building belted tyres in only one step. The apparatus comprises a drum with a rigid cylindrical surface, on which a carcass is built by applying one or more radial carcass plies around the drum itself. Subsequently, around the ends of the carcass plies, the bead cores of the beads are positioned, the drum is radially dilated up to a diameter for placing the bead cores and the ends of the carcass plies are turned up around the bead cores themselves. A central section of the drum is further radially dilated while lateral sections of the drum itself that bear the bead cores are moved towards each other and towards the central section for shaping the carcass structure in order to subsequently receive the belts and the tread band.

The document US4214939 illustrates a machine for the building of tyres comprising devices for locking beads of expandable type. Such locking devices are used together with a central drum of expandable type for the first step operations or together with a central drum of rigid type that can be expanded and contracted for the operations in a single step.

DE 1579301 discloses a method of forming a tire, wherein the carcass sidewall portions are held under tension during expansion of the central drum portion by supporting bead rings in engagement with the sidewall portions during shaping.

US 2084009 discloses a tire manufacturing method using an inflatable resilient drum.

EP 0997263 discloses a method for manufacturing pneumatic tires, wherein a green case comprised of at least one inner liner rubber member and a carcass ply member is formed on a first drum and transferred to a position around a second drum.

WO 2008099236 discloses a method for manufacturing pneumatic tires wherein a carcass ply is applied around an outer surface of a building drum, according to an application diameter greater than the fitting diameter of the tire.

Further methods and devices for manufacturing pneumatic tires are disclosed in WO 2006/058599 A1 and EP 2 431 163 A1.

In such technical field, the Applicant has perceived the need to simplify the structure of the apparatuses of known type for obtaining tyres, in a manner so as to reduce the production, management and maintenance costs of the apparatuses themselves and consequently the cost of production of the tyres, while maintaining the performance qualities of the produced tyres substantially unchanged.

The Applicant has observed that the known processes, in one or two steps, of the type described above with reference to the prior art documents, provide for the use of articulated and complicated mechanical and/or pneumatic devices integrated in the building drum and/or operatively connected to the drum itself and adapted to toroidally conform the carcass structure.

In particular, the Applicant has observed that the most complex known devices are those used for managing the opposite ends of the carcass structure that project axially beyond the building drum, for manipulating the annular anchoring structures when the latter are engaged with said opposite ends, in order to form the beads of the tyre and lock the beads themselves during the toroidal conformation.

The Applicant has indeed observed that the devices adapted to engage the already-formed beads of the carcass structure, in order to lock them radially and accompany them in mutual axial approaching during the toroidal conformation of the carcass structure itself (obtained mechanically or pneumatically), in addition to being mechanically complex, are also quite bulky and heavy, such that even the tools for managing and moving the drums must be suitably sized.

In this context, the Applicant has perceived the need to propose a simplified process and apparatus for the obtainment of tyres for vehicle wheels.

The Applicant has perceived that such result can be obtained by proposing a process and an apparatus in which the formation of the beads is not a prerequisite for the subsequent radial dilatation of the carcass sleeve.

The Applicant has found that such result can be obtained by radially dilating first the single axially central portion of the carcass sleeve and only subsequently forming the beads, by means of a configurable drum that is not provided with dedicated devices for the controlled movement of the beads themselves.

More particularly, according to an aspect, the present invention relates to a process for building tyres for vehicle wheels according to claim 1.

In accordance with a further aspect, the present invention relates to an apparatus for building tyres for vehicle wheels according to claim 11.

With the term "semi-finished product in form of a continuous strip cut to size" it is intended a semi-finished product made of elastomeric material of conventional type, i.e. already having the correct width adapted to constitute the respective component of the tyre and previously cut according to the circumferential extension of the external surface of the building drum, in a manner so as to be able to join the opposite ends thereof once wound on said drum.

By "component made of elastomeric material" of the tyre, it is intended any part made of elastomeric material of the tyre (e.g. tread band, sidewalls, liner, under-liner, fillers in the zone of the bead, inserts of the sidewalls in the self-supporting tyres, antiabrasive inserts, etc.), or a portion thereof, or the set formed by one or more of the aforesaid parts or portions thereof.

With the term "elastomeric material", it is intended to indicate a composition comprising at least one elastomeric polymer and at least one reinforcement filler. Preferably, such composition also comprises additive such as, for example, a cross-linking agent and/or a plasticising agent. Due to the presence of the cross-linking agent, by means of heating such material can be cross-linked, so as to form the final manufactured item.

The Applicant deems that the process and the apparatus according to the invention allow building tyres in a simple and quick manner by using equipment with much lower cost than the apparatuses of known type, while ensuring the quality of the tyres produced.

The Applicant has indeed verified that the lack of locking of the preformed beads (as instead occurs in the prior art) does not compromise the precision in the subsequent steps of the building process and the quality of the tyres produced.

Indeed, the radial dilatation of only the central portion gives also the effect of axially locking the entire carcass sleeve, while the opposite axial edges, which project free without the annular anchoring structures, approach symmetrically the equatorial plane, only due to the effect of the radial dilation. The symmetry of the tyre is in any case ensured and moreover the beads, which are not yet formed, do not risk being damaged by the devices dedicated thereto and present in the prior art documents.

For such purpose, the Applicant has verified that the simplified process and apparatus according to the invention are particularly suitable for the attainment of tyres preferably of radial type, preferably with high curvature, preferably for motorcycles.

The tyres for motorcycles obtainable by means of the process and the apparatus according to the invention, respectively front and rear, have a transverse curvature (f/C) ratio of at least 0.20 and a total height/chord (H/C) ratio of at least 0.30. In particular, the process and the apparatus according to the invention are preferably suitable for obtaining tyres that have a section height not significantly different from the width or chord, such as the tyres for motorcycles having a total height/chord (H/C) ratio of at least 0.70, still more preferably of at least 0.80.

More particularly, the Applicant has verified that the simplified process and apparatus according to the invention are adapted for obtaining tyres of radial type, with belt at 0° intended for mounting on the front wheel or on the rear wheel of motorcycles with low-medium power and/or medium-powered (e.g. 150-500 cm³). Such tyres can travel with speeds up to 240 Km/h (they have a speed index up to "VR") and do not require particularly rigid belt structures (due to the non-excessive centripetal forces that they must support). It follows that the reinforcement cords of the belt at 0° have a longitudinal elasticity modulus "E" such to allow their elongation (and hence the completion of the radial dilatation of the tyre) in moulding/curing step. The present invention, in at least one of the aforesaid aspects, can have one or more of the preferred characteristics that are described hereinbelow. Preferably, said semi-finished product comprises wire-like reinforcement elements arranged substantially parallel to a central axis of the building drum. The process allows building radial tyres in which the wire-like reinforcement elements, once the tyre is shaped, each lie in a respective radial plane of the tyre itself. The fact that the opposite axial edges are free facilitates the deformation since said wire-like reinforcement elements do not resist the radial dilatation of the axially central portion. Preferably, the wire-like reinforcement elements are generally constituted by textile cords, such as lyocell, rayon, nylon, polyester (e.g. polyethylene-naphthalate PEN, polyethylene-terephthalate PET) rubberized with an elastomeric material by previous bonding treatment.

Preferably, the winding of the semi-finished product comprises: applying only the axially central portion of said semi-finished product against a central circumferential portion of a radially external surface relative to the building drum while opposite axial edges of the semi-finished product project substantially cantilevered. The winding of the semi-finished product is carried out without abutting the opposite axial edges against any surface of the building drum. In this manner, said opposite axial edges are already free for the subsequent dilatation.

Possibly, in a preferred embodiment, at the junction between the opposite ends of the semi-finished product wound on the drum, a support is arranged also for the opposite axial edges, in a manner so as to make the compression between said opposite ends easier and thus the mutual junction of such ends more secure.

Preferably, said axially central portion of the semi-finished product has a width comprised between about 1/5 and about 1/3 of the total width of said semi-finished product. The central portion that is abutted against the building drum is in such a manner sufficiently extended so as to ensure the stability of the semi-finished product during the winding and hence the correct positioning of the same on the drum and the correct junction between the opposite ends.

According to a preferred embodiment, the radial dilatation is obtained by radially expanding the building drum. It is the same radially external surface of the building drum that, by being dilated, pushes against the semi-finished product wound as a ring on the drum itself to determine the radial expansion, without the aid of pneumatic systems and without inflating from the interior the semi-finished product itself. Such system prevents the problems of air seal between the carcass sleeve and the building drum, typical of the known processes. The abovementioned axial extension of the central portion abutted against the building drum ensures the stability of the semi-finished product even during the radial expansion of the drum.

Preferably, the process comprises: abutting opposite lateral portions of the carcass sleeve against lateral portions of the radially external surface relative to the building drum. During the radial dilatation of the axially central portion of the carcass sleeve, the opposite lateral portions tend to radially contract towards the main axis of the drum but, in order to obtain the desired shape, they are preferably pressed and laid against two lateral circumferential portions of the building drum.

Preferably, after said radial dilatation, a peripheral diameter of the carcass sleeve is comprised between about 90% and about 98% of the peripheral diameter of the carcass structure in the moulded and cured tyre. The remaining part of radial dilatation is obtained during the course of the moulding/curing. Such part obtained in the curing is greater than that in the prior art, in which the radial dilatation is almost entirely carried out on the building drum. The partially shaped, green tyre is inserted in the mould more easily and without the risk of damaging it during the closure of the mould itself, due to its reduced size.

Preferably, the process comprises: applying a belt structure around the dilated carcass sleeve. The belt structure is applied after the dilatation of the carcass sleeve, laying the necessary semi-finished products directly on the same sleeve, without a construction of the belt structure previously carried out in another station or stations.

Preferably, applying the belt structure comprises: winding - according to adjacent or partly superimposed turns - at least one continuous elongated element around the carcass sleeve for forming a belt structure at 0°. It must be specified that, with the term "continuous elongated element", it is intended an elongated element in form of a continuous strip comprising at least one reinforcement cord, e.g. textile, metallic, synthetic, etc., preferably embedded in the elastomeric material. The continuous elongated element is wound in turns, each substantially arranged in a plane orthogonal to the main axis of the building drum. A head for supplying the continuous elongated element is moved parallel to the main axis of the drum while the drum rotates around its own axis.

Preferably, the continuous elongated element comprises: a plurality of reinforcement cords embedded in at least one layer made of elastomeric material. Alternatively, the continuous elongated element comprises a plurality of reinforcement cords covered with a bonding layer.

Such reinforcement cords can be textile or metal. For example, the continuous elongated element is a strip-like element made of nylon that has been rubberized or made adhesive.

Preferably, each reinforcement cord has an extension comprised between about 6% and about 8% at a 45N load. This allows conferring a further radial dilatation during the curing/moulding.

Preferably, the continuous elongated element is wound to form a plurality of layers, in a manner such that multiple belt layers are formed. Preferably, the supply head for the continuous elongated element is moved first in one direction and then in the other (with a Z-shaped trajectory with respect to the building drum) parallel to the main axis of the drum while the drum itself rotates around its own axis.

Preferably, the supply head for the continuous elongated element is moved first in one direction and then in the other (with a U-shaped trajectory with respect to the building drum) parallel to the main axis of the drum while the drum itself rotates around its own axis.

Preferably, the supply head for the continuous elongated element is moved in one direction in a manner so as to lay the elongated element in a crown zone in only one layer parallel to the main axis of the drum while the drum itself rotates around its own axis.

Preferably, in addition to or as an alternative to the layer at 0°, the process comprises: winding at least one auxiliary semi-finished product in form of a continuous strip cut to size circumferentially around the carcass sleeve. In a manner analogous to that made with the carcass ply or plies, the previously prepared auxiliary semi-finished product, already with the correct width, is wound around the building drum until its opposite ends are joined together. Preferably, said at least one auxiliary semi-finished product has inclined reinforcement cords relative to a longitudinal extension thereof.

Preferably, the auxiliary semi-finished products are at least two superimposed auxiliary semi-finished products and they have inclined reinforcement cords in opposite directions for forming a cross-ply belt structure. In this manner, belt layers are obtained having textile or metallic reinforcement cords with cross orientation.

Said reinforcement cords are preferably made of nylon.

Preferably, the process comprises: applying only one axially central portion of said auxiliary semi-finished product against a central portion of a radially external surface relative to the building drum while opposite axial edges of the auxiliary semi-finished product project cantilevered.

Preferably, the process comprises: abutting the opposite axial edges of said auxiliary semi-finished product against lateral portions of the radially external surface relative to the building drum.

The auxiliary semi-finished product is abutted against the carcass sleeve or against the belt structure at 0° at the central portion of the building drum and, if its width is greater than such central portion, the opposite axial edges, which project beyond the central portion, are folded against the lateral portions of the carcass sleeve and/or against the belt structure at 0°.

According to one embodiment, the belt structure is applied before turning up each of the axially opposite terminal zones around the respective annular anchoring structure.

According to a different embodiment, the belt structure is applied after turning up each of the axially opposite terminal zones around the respective annular anchoring structure.

Since the engagement of the annular anchoring structures with the carcass ply/plies, the turning up of the opposite axial edges and the locking of the beads are not operations necessary and preparatory for the subsequent radial dilatation, the application sequence of the belt structure can be selected on the basis of the product specifications.

Preferably, the process comprises: applying a tread band around the dilated carcass sleeve.

Preferably, applying the tread band comprises: winding said tread band in form of a continuous strip cut to size circumferentially around the carcass sleeve. In a manner analogous to that made with the carcass ply or plies, the previously prepared tread band, already with the correct width, is wound around the building drum until its opposite ends are joined together.

In a preferred embodiment, said tread band in form of a continuous strip cut to size integrates the sidewalls of the tyre. Alternatively, the sidewalls are laid successively and separately from the tread band.

Preferably, the process comprises: abutting the opposite axial edges of said tread band in form of a continuous strip cut to size against lateral portions of the radially external surface relative to the building drum. The tread band is abutted against the carcass sleeve or against the belt structure at the central portion of the building drum and, if its width is greater than such central portion, the opposite axial edges, which project beyond the central portion, are folded against the lateral portions of the carcass sleeve and/or against the belt structure.

Preferably, the process comprises: moulding and curing the green tyre imparting to said green tyre an additional radial expansion.

Preferably, during the additional radial expansion the belt structure at 0° is subjected to a circumferential elongation comprised between about 2% and about 10%.

Such elongation and the corresponding radial dilatation, possible due to the characteristics of the reinforcement cords used, are greater than that which occurs in the known processes and this allows reducing the amount of radial dilatation of the carcass ply to be obtained on the building drum, rendering this step less problematic.

Preferably, the radially external surface of the building drum is rigid. It is the rigid surface - without the aid of chambers that are inflated or of gas introduced below the carcass sleeve - which pushes against said carcass sleeve and dilates it.

Preferably, in a radial section of the building drum, the radially external surface has a convex shape. Such shape allows supporting the single axially central portion of the semi-finished product while the opposite axial edges project cantilevered.

In a preferred embodiment, the radially external surface comprises: a central circumferential portion and two lateral circumferential portions extending from the central circumferential portion and converging towards the main axis of the building drum. Preferably, each of the lateral circumferential portions has diameters progressively decreasing as one axially moves away from the central circumferential portion.

Preferably, in a radial section of the building drum, the central circumferential portion is substantially parallel to the main axis of the building drum and preferably flat. Such geometry allows a stable support of the axially central portion of the semi-finished product.

Preferably, in a radial section of the building drum, each of the two lateral circumferential portions is inclined towards the main axis of the building drum and is preferably flat. Such geometry allows a stable support of the opposite axial edges of the semi-finished product, in particular during the turning up of each of said opposite axial edges around the respective annular anchoring structure. In addition, the shape of the radially external surface in its entirety is such to allow a simple and inexpensive achievement.

Preferably, in a radial section of the building drum, the central circumferential portion has an axial width comprised between about 1/3 and about 1/2 of a total axial width of the radially external surface. Preferably, in a radial section of the building drum, the central circumferential portion has an axial width comprised between about 1/5 and about 1/3 of an axial width of said at least one carcass ply. Preferably, in a radial section of the building drum, each of the two lateral circumferential portions is inclined relative to the central circumferential portion by an angle comprised between about 20° and about 45°. The abovementioned measurements ensure the secure and correct support of the semi-finished products and the conferment, directly on the building drum, of the correct shape, a prerequisite for the definitive toroidal shape subsequently obtained in the vulcaniser.

In a preferred embodiment, the building drum comprises a plurality of radially movable angular sectors, carrying the radially external surface and operatively connected to the devices for radially configuring the building drum. The structure with sectors is simple and effective for obtaining a modification of the radial size of the building drum.

Preferably, said plurality of angular sectors comprises: main sectors having a greater circumferential extension and connection sectors having a smaller circumferential extension.

Preferably, each of the connection sectors is interposed between two main sectors at least when said building drum is configured radially according to the larger application diameter. The connection sectors ensure the continuity of the support between two greater sectors when the drum is in the configuration of maximum expansion, i.e. when the carcass sleeve is radially dilated.

Preferably, the building drum comprises a sheath for covering the angular sectors covering said radially external surface. The sheath ensures a perfect continuity of the surface on which the semi-finished product rests, and allows more easily releasing the green tyre from the drum once built. Preferably, the ratio between the smaller application diameter and the larger application diameter is comprised between about 0.8 and about 0.9. This signifies that the radial dilatation carried out on the building drum is not excessive and is not such to generate seal problems for the joint and/or tearing of the semi-finished product.

Preferably, the building drum can be radially configured according to a rest diameter smaller than the smaller application diameter. The drum is contracted to the rest diameter in order to be able to easily remove the green tyre. The building drum is therefore capable of assuming three configurations: a rest configuration (rest diameter Φ0), a smaller application configuration (with diameter Φ1) and a greater application configuration (with diameter Φ2).

Such description will be set forth hereinbelow with reference to the enclosed drawings, provided only for exemplifying and hence non-limiting purposes, in which:
Further characteristics and advantages will be clearer from the description of a preferred but not exclusive embodiment of a process and an apparatus for building tyres for vehicle wheels in accordance with the present invention.

Such description will be set forth hereinbelow with reference to the enclosed drawings, provided only for exemplifying and therefore non-limiting purposes, in which:
- Figure 1 schematically shows, in radial half section, a tyre for vehicle wheels built according to the process and with the apparatus of the present invention;
- Figures 2a, 2b and 2c schematically show a building drum according to the present invention in a partial equatorial section and in respective operative configurations;
- Figures 3a - 3f show respective radial half sections of the building drum of figures 2a, 2b and 2c during respective building steps in accordance with the process according to the present invention.

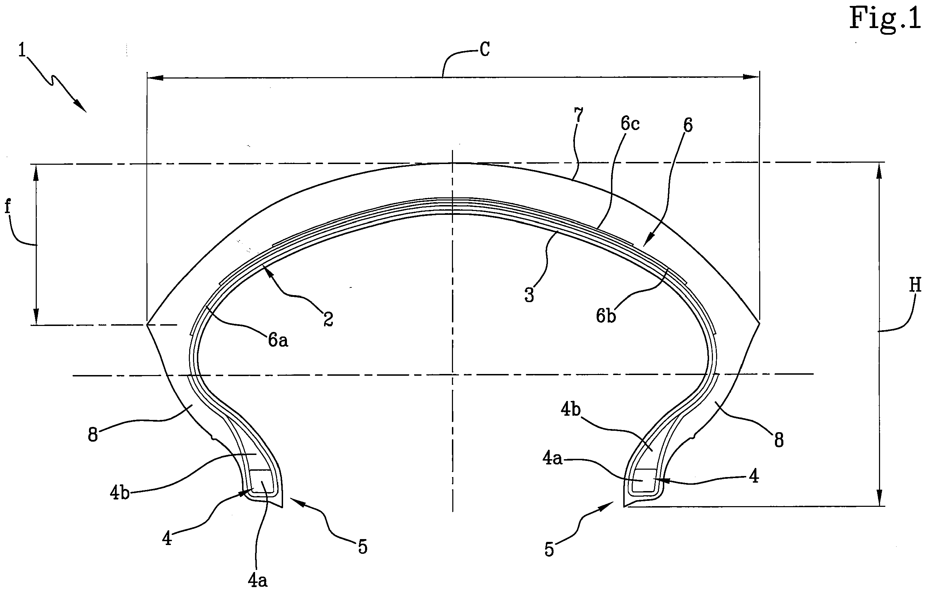

With reference to figure 1, reference number 1 indicates overall a tyre for motorcycles, essentially comprising at least one carcass ply 2 preferably internally covered with a layer made of impermeable elastomeric material or so-called liner 3. Two annular anchoring structures 4, each comprising a so-called bead core 4a carrying an elastomeric filler 4b in radially outer position, are engaged with respective terminal zones 2a of the carcass ply or plies 3. The annular anchoring structures 4 are integrated in proximity to zones normally identified with the name of "beads" 5, at which the engagement normally occurs between the tyre 1 and a respective mounting rim (non depicted), according to a fitting diameter determined by the internal diameter sizes of the annular anchoring structures 4. A belt structure 6 is circumferentially applied around the carcass ply/plies 2, and a tread band 7 is circumferentially superimposed on the belt structure 6. Two sidewalls 8, each extending from the corresponding bead 5 to a corresponding lateral edge of the tread band 7, are applied in laterally opposite positions on the carcass ply/plies 2.

The tyre for motorcycles 1 has a high transverse curvature. In a preferred embodiment, the tyre for motorcycle of the invention is a rear tyre having size of the chord (C) substantially comprised between 100 and 160 mm. Preferably the distance (f) between the radially outer point of the tread and the line passing through the laterally opposite ends of the tread itself of the rear tyre is substantially comprised between 30 and 80 mm. Typically the transverse curve ratio (f/C) is substantially comprised between 0.20 and 0.50. Preferably the total height/chord (H/C) ratio is substantially comprised between 0.30 and 0.80.

In a preferred embodiment, the tyre is a tyre for a front wheel of motorcycles having size of the chord substantially comprised between 100 and 130 mm. Preferably the distance (f) between the radially outer point of thread and the line passing through the laterally opposite ends of the tread itself of the front tyre is substantially comprised between 30 and 65 mm. The transverse curvature/chord (f/C) ratio can be substantially comprised between 0.20 and 0.60. Preferably the (total height)/chord (H/C) ratio is substantially comprised between 0.50 and 1.

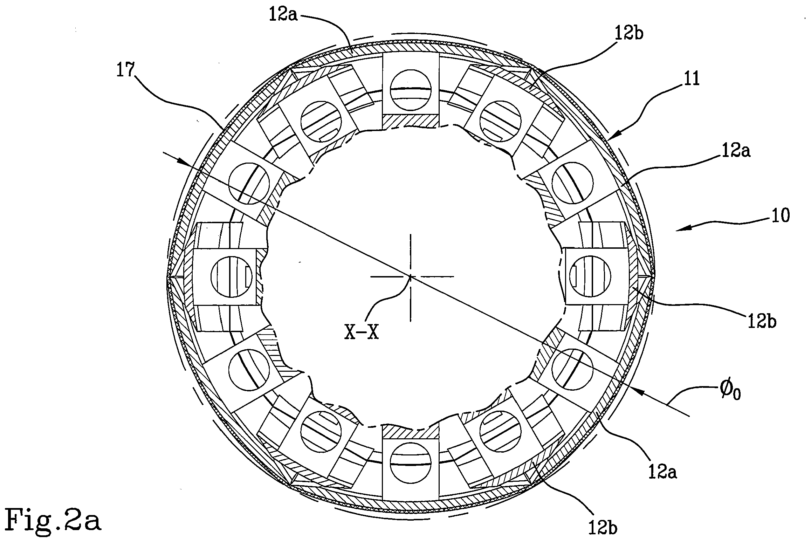

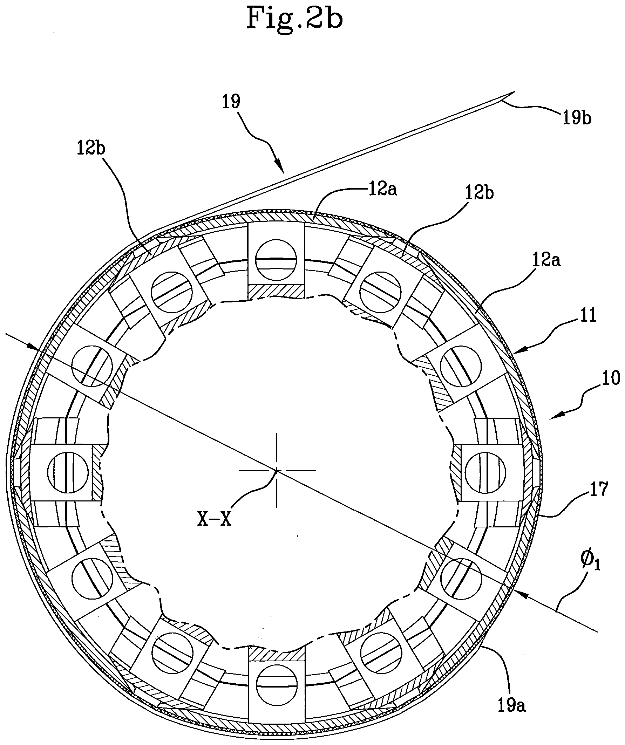

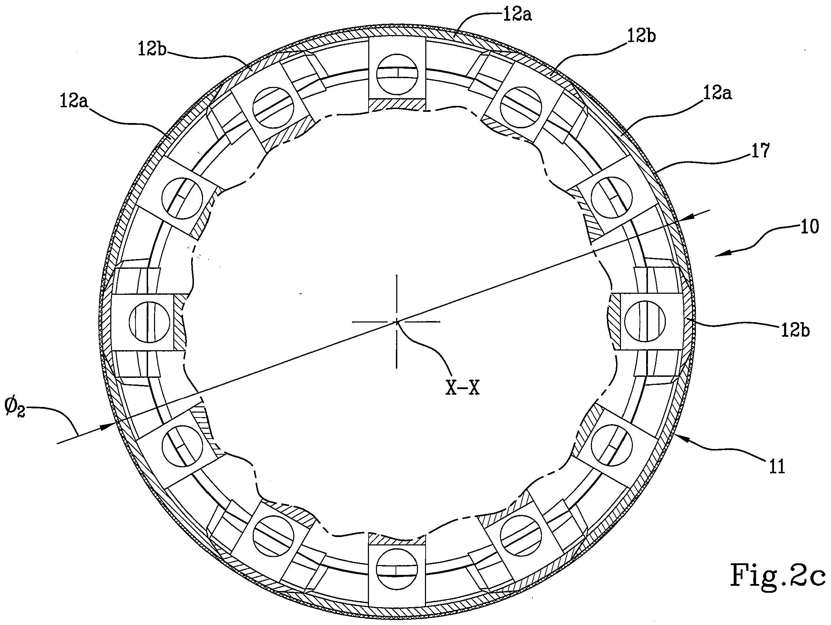

The tyre for motorcycles 1 is obtained with an apparatus comprising a building drum 10 radially configurable and having a radially external surface 11 adapted to receive in abutment the components of the tyre 1 being formed. The building drum 10 comprises a plurality of angular sectors 12a, 12b, each having its radially external surface adapted to make up the radially external surface 11 of the drum 10. Preferably, the building drum 10 comprises a plurality of angular main sectors 12a (there are six such main sectors in the embodiment illustrated in figures 2a, 2b and 2c) and a plurality of angular connection sectors 12b (there are six of such connection sectors in the embodiment illustrated in figures 2a, 2b and 2c). In an equatorial section plane of the building drum 10, the radially external surface of the angular main sectors 12a and, preferably, also of the angular connection sectors 12b, is curved. The angular main sectors 12a are extended circumferentially for a greater length than the angular connection sectors 12b or, in other words, the radially external surface of the angular main sectors 12a subtends a greater angle than the angle subtended by a radially external surface of the angular connection sectors 12b. Preferably, the circumferential length of the angular main sectors 12a is comprised between about 2 and about 4 times the circumferential length of the angular connection sectors 12b. Both the angular main sectors 12a and the connection sectors 12b are movable in synchrony along respective radial directions by radial configuration devices, not illustrated, in a manner so as to have the building drum 10 assume different radial configurations.

In the illustrated embodiment, the building drum 10 is configurable in a first contracted configuration (figure 2a) according to a rest diameter (Φ0). In such contracted configuration, each of the angular main sectors 12a is in the position closest to a main axis "X-X" of the building drum 10 and lies adjacent to the two adjacent angular main sectors 12a. In such first contracted configuration, the opposite circumferential edges of the angular main sectors 12a lie in close proximity or in mutual contact. The radially external surface 11 of the drum 10 is only formed by the radially external surfaces of the angular main sectors 12a. In an equatorial plane or in a side view (figure 2a), the radially external surface 11 of the building drum 10 in its entirety is not perfectly circular but is formed by circular arcs corresponding to the angular main sectors 12a. By rest diameter (Φ0) it is therefore intended the diameter of a circumference circumscribed to the radially external surface 11. Each of the angular connection sectors 12b lies in a radially more internal position with respect to the angular main sectors 12a and each at a respective zone of close proximity or mutual contact between the opposite circumferential edges of the angular main sectors 12a.

The building drum 10 is configurable in a second configuration (figure 2b) according to a smaller application diameter "Φ1" and in a third configuration (figure 2c) according to a larger application diameter "Φ2". Both the second smaller application diameter "Φ1" and the third larger application diameter "Φ2" are greater than the rest diameter "Φ0".

In the second configuration, each of the angular main sectors 12a is radially moved away from the main axis "X-X" with respect to the first contracted configuration. The opposite circumferential edges of the angular main sectors 12a are spaced from each other by a greater distance than that presented by the building drum 10 in the contracted configuration but less than the circumferential length of the angular connection sectors 12b. The angular connection sectors 12b still lie in a radially more internal position with respect to the angular main sectors 12a and each faces a respective opening delimited between two of said angular main sectors 12a. In an equatorial plane or in a side view (figure 2b), the radially external surface 11 of the building drum 10 in its entirety is not yet perfectly circular but is formed by circular arcs corresponding to the angular main sectors 12a and by the openings interposed therebetween. By smaller application diameter "Φ1" it is therefore intended the diameter of a circumference circumscribed to the radially external surface 11.

In the third configuration (figure 2c), each of the angular main sectors 12a is moved further away from the main axis "X-X" with respect to the second configuration. The opposite circumferential edges of the angular main sectors 12a are spaced from each other by a distance substantially equal to the circumferential length of the angular connection sectors 12b. The angular connection sectors 12b are moved radially away from the main axis "X-X" until they are each arranged between two angular main sectors 12a. Each of the angular connection sectors 12b substantially has the same radial distance from the main axis "X-X" as the angular main sectors 12a and lies circumferentially adjacent to two of said angular main sectors 12a. The radially external surface of the angular main sectors 12a and of the angular connection sectors 12b forms the overall continuous radially external surface 11 of the building drum 10. The curvature of the radially external surface of the angular main sectors 12a and of the angular connection sectors 12b is such that in the third configuration, in an equatorial plane or in a side view of the building drum 10 (figure 2c), the radially external surface 11 of the building drum 10 in its entirety is substantially circular. The larger application diameter "Φ2" is the diameter of the circumference of the radially external surface 11. The ratio between the smaller application diameter "Φ1" and the larger application diameter "Φ2" is comprised between about 0.8 and about 0.9. The ratio between the rest diameter "Φ0" and the larger application diameter "Φ2" is comprised between about 0.7 and about 0.8.

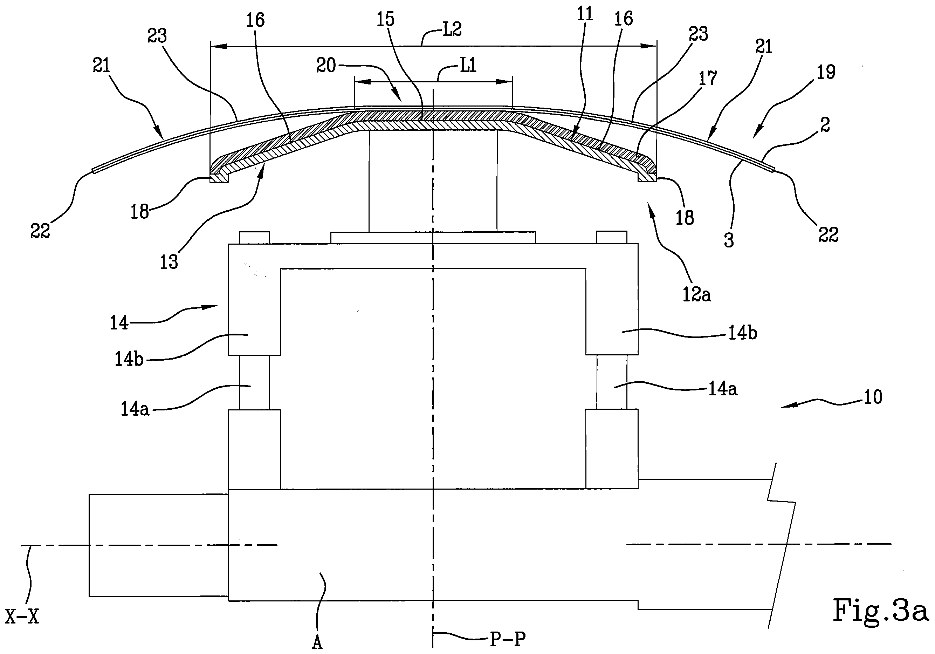

In a radial plane of the building drum 10 (plane containing the main axis "X-X"), each of the angular main sectors 12a and angular connection sectors 12b (figure 3a - 3f) comprises a shaped plate 13 that carries the respective radially external surface 11. In said radial plane, each of the angular main sectors 12a and angular connection sectors 12b has a curved shape, convex towards the exterior (like the respective radially external surface 11) and symmetric with respect to an equatorial plane "P-P" of the drum 10 itself. In radially inner position with respect to the shaped plate, guide mechanisms 14 are present (illustrated only in a schematic manner) that are connected to the radial configuration devices, not illustrated, capable of radially and synchronously moving the angular main sectors 12a and angular connection sectors 12b as described above. The guide mechanisms 14 illustrated comprise two pins 14a mounted on a central shaft "A" of the building drum 10 and extended radially therefrom. On each of the pins 14a, a sleeve 14b is slidably arranged integral with the shaped plate 13.

The radially external surface 11 comprises a central circumferential portion 15 and two lateral circumferential portions 16. Seen in the radial plane (figure 3a-3f), the central circumferential portion 15 is substantially flat and perpendicular to the equatorial plane "P-P" of the building drum 10. The central circumferential portion 15 substantially has the shape of a right circular cylinder. The two lateral circumferential portions 16 are continuously extended from opposite sides of the central circumferential portion 15 and each converges towards the main axis "X-X". In the illustrated embodiment, also each of the two lateral circumferential portions 16 is substantially flat and connected to the central circumferential portion 15 with a respective curved section. Each of the two lateral circumferential portions 16 substantially has frustoconical form.

In the radial section of the building drum 10, the central circumferential portion 15 has an axial width "L1" comprised between about 1/3 and about 1/2 of a total axial width "L2" of the radially external surface 11. The axial width "L1" of the central circumferential portion 15 is comprised between about 1/5 and about 1/3 of an axial width of the semi-finished product 19. Each of the two lateral circumferential portions 16 is inclined relative to the central circumferential portion 15 by an angle "α" comprised between about 20° and about 45°.

In the illustrated embodiment, the described geometry of the radially external surface 11 is obtained by making the plate 13 of each angular sector 12a, 12b with (seen in the radial plane) one rectilinear central section and two inclined lateral sections.

The building drum 10 also comprises a covering sheath 17 (preferably an elastic membrane) arranged all around the radially external surface 11 of the building drum 10 and in contact with said radially external surface 11. The covering sheath 17 covers the entire radially external surface 11 and follows the radial dilatation and contraction of the drum 10 itself. In the illustrated embodiment (figures 3a-3f), the covering sheath 17 is joined to each of the angular main sectors 12a at axially opposite ends 18 thereof. The radially external surface 11 acts as rigid support for the components of the tyre being formed and the covering sheath 17 ensures the continuity even in the passage zones between one circumferential sector and the next 12a, 12b.

In accordance with the process according to the invention, the building drum 10, which lies in the first contracted configuration (figure 2a) according to the rest diameter "Φ0", is radially expanded until it is brought in the second configuration (figures 2b and 3a) to the smaller application diameter "Φ1".

Application devices, not illustrated, supply a semi-finished product 19 in form of a continuous strip cut to size with length equal to the circumferential extension of the central circumferential portion 15 of the building drum 10 with width already corrected, and they lay a head end 19a on said radially external surface 11 or better yet on the covering sheath 17 that covers the radially external surface 11. In particular, an axially central portion 20 of the head end 19a is abutted against the flat central circumferential portion 15 while two axially opposite terminal zones 21 of the semi-finished product 19 project beyond the axially opposite ends 18 of the building drum 10. Opposite lateral portions 23 of the semi-finished product 19, adjacent to the axially central portion 20, remain spaced from the respective two lateral circumferential portions 16 of the radially external surface 11 (figure 3a).

By means of the rotation of the building drum 10 around its main axis "X-X" (figure 2b), the semi-finished product 19 in form of a continuous strip is wound around the radially external surface 11 until the head end 19a is mated with a tail end 19b and they are mutually joined, forming a carcass sleeve. In such situation, the axially central portion 20 of the carcass sleeve stably abuts against the covering sheath 17 which is situated in contact with the central circumferential portion 15 of the building drum 10.

The axially central portion 20 of the semi-finished product 19 (or of the carcass sleeve) has the same width "L1" as the central circumferential portion 15 of the building drum 10 comprised between about 1/5 and about 1/3 of the axial width of the semi-finished product 19.

Preferably, the semi-finished product 19 in form of a continuous strip comprises the liner 3, which is directly abutted against the covering sheath 17, and the carcass ply 2. Alternatively, first the liner 3 can be applied, and the carcass ply 2 on the liner 3. Preferably, the carcass ply 2 is of radial type, i.e. it comprises wire-like reinforcement elements arranged substantially perpendicular to the longitudinal extension of the semi-finished product 19 itself. This means that in the cured tyre 1, such wire-like reinforcement elements lie in radial planes.

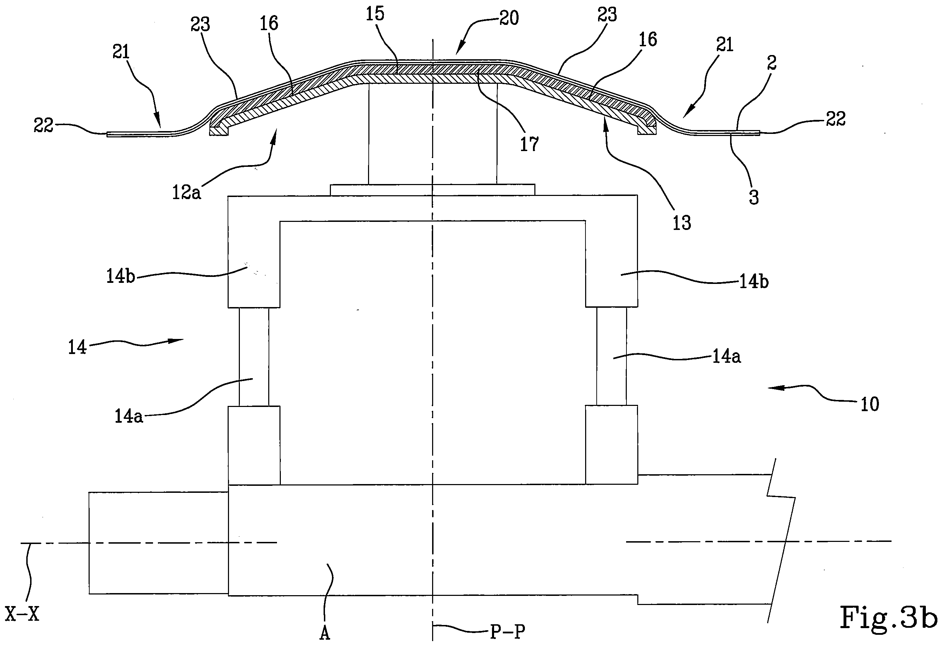

Subsequently, the building drum 10 is radially expanded until it is brought in the third configuration (figures 2c and 3b) to the larger application diameter "Φ2". In this manner, the axially central portion 20 of the carcass sleeve is radially dilated and the carcass sleeve assumes a partially toroidal configuration. The two opposite lateral portions 23 are abutted against the covering sheath 17 at the two lateral circumferential portions 16. If they are not abutted due to the dilatation, they are subsequently abutted against the two lateral circumferential portions 16. The two opposite axial edges 22, which are still free and arranged cantilevered, move themselves a little towards the equatorial plane "P-P". The width of the semi-finished product substantially does not change, since the wire-like reinforcement elements do not allow this. After the abovementioned dilatation, the peripheral diameter of the carcass sleeve is comprised between about 90% and about 98% of the peripheral diameter of the carcass structure in the moulded and cured finished tyre.

In this step, the annular anchoring structures 4 are not yet engaged with the carcass sleeve. Mechanisms are not present for locking the annular anchoring structures 4 on the carcass sleeve, nor are there devices adapted to manage the beads 5 (not yet formed) while the building drum 10 passes from the second to the third configuration, i.e. from the smaller application diameter "Φ1" to the larger application diameter "Φ2".

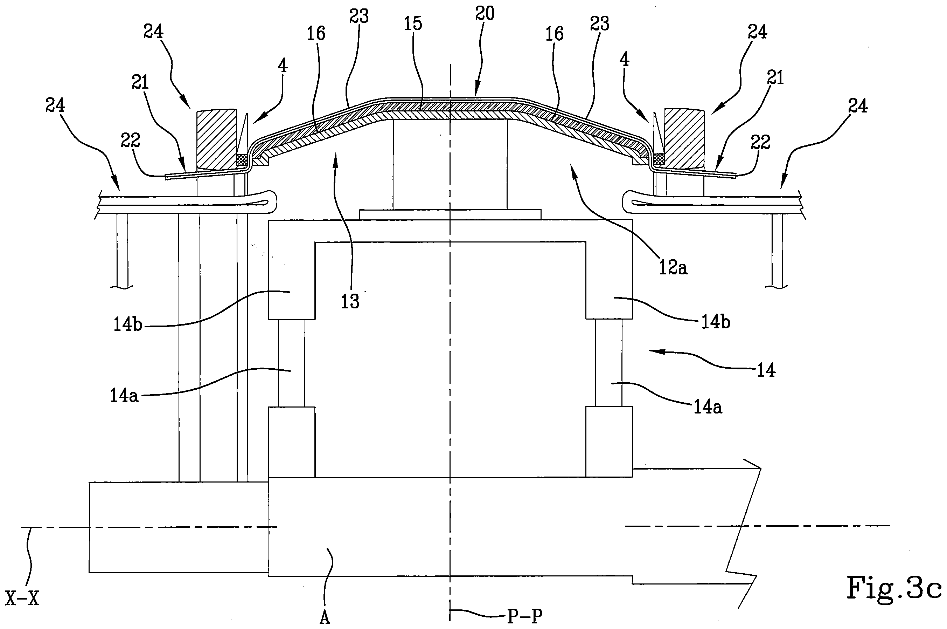

While the building drum 10 is situated in the third configuration (figure 3c), devices 24 coaxially engage an annular anchoring structure 4, around each of the two axially opposite terminal zones 21 of the carcass ply 2. Each annular anchoring structure 4 is fitted on the respective terminal zone 21 and abutted against a sidewall of a respective end 18 of the building drum 10.

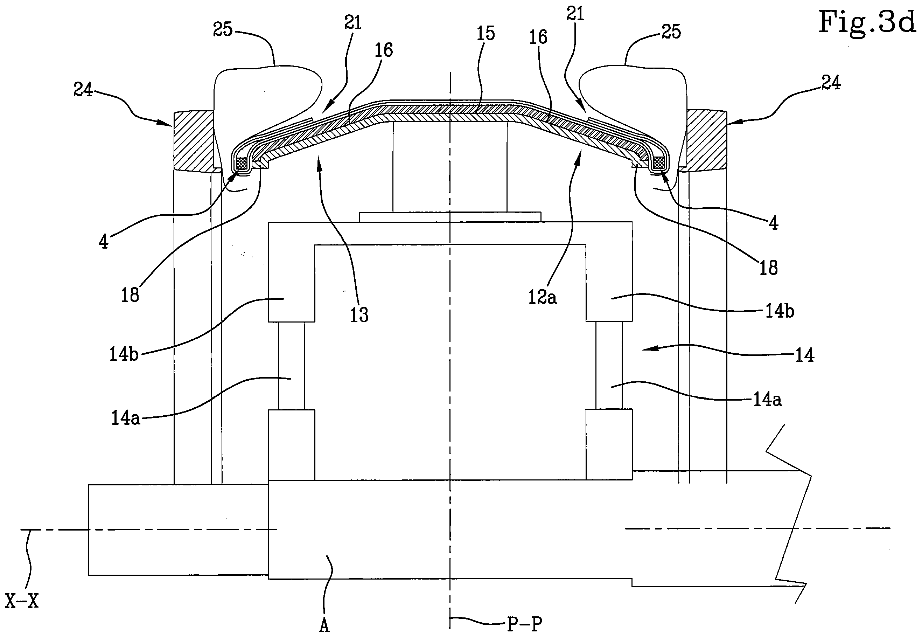

Each of the two axially opposite terminal zones 21 is subsequently turned up (figure 3d) around the respective annular anchoring structure 4 and abutted against the respective lateral portion 23 already laid against the lateral circumferential portion 16 of the radially external surface 11. The devices 25 for turning up each of the two axially opposite terminal zones 21 preferably comprise inflatable chambers arranged at the axially opposite ends 18 of the building drum 10.

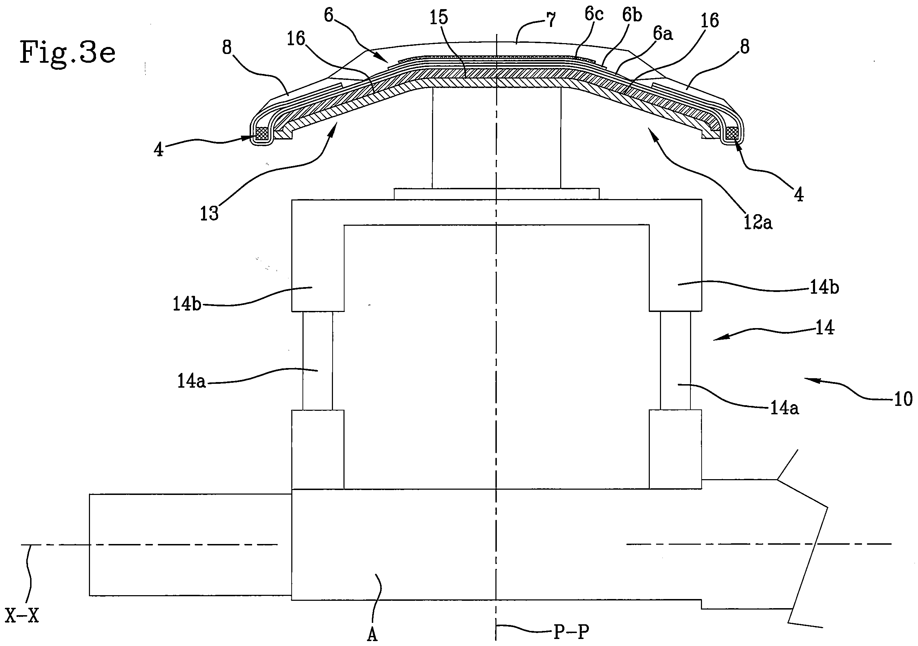

While the building drum 10 is still situated in the third configuration (figure 3e), the belt structure 6 is applied on the carcass sleeve. In the illustrated embodiment, the belt structure 6 is formed by first applying two auxiliary semi-finished products 6a, 6b, each comprising reinforcement cords, preferably made of nylon, inclined with respect to the longitudinal extension thereof. The two auxiliary semi-finished products 6a, 6b have cords inclined in opposite directions in a manner so as to form a so-called a cross-ply structure. Application devices, not illustrated, supply each of the auxiliary semi-finished products 6a, 6b separately or already coupled together in form of a continuous strip cut to size with width already corrected and length equal to the circumferential extension of the central circumferential portion 15 of the building drum 10 (dilated at the larger application diameter "Φ2") and they lay a head end 19a on the carcass sleeve at said central circumferential portion 15. By means of the rotation of the building drum 10 around its main axis "X-X", the auxiliary semi-finished product 6a, 6b in form of a continuous strip is wound around the carcass sleeve until the head end 19a is mated with a tail end 19b and they are mutually joined. In addition, if necessary, after the winding opposite axial edges of the auxiliary semi-finished product 6a, 6b are abutted against the carcass sleeve at the lateral portions 16 of the radially external surface 11 of the building drum 10. Preferably, in radially outer position relative to the two auxiliary semi-finished products 6a, 6b, a further belt layer 6c is applied with reinforcement cords arranged at 0°. The layer at 0° is formed by winding - according to adjacent or partly superimposed turns - a continuous elongated element comprising at least one reinforcement cord. The reinforcement cords, for example made of Nylon, can be incorporated within a layer made of elastomeric material, having been previously treated with a typical bonding composition. Preferably, each reinforcement cord has an extension comprised between about 6% and about 8% at a 45N load. In accordance with one embodiment, the cords are made of Ny 6.6 dtex 1880, single ply.

The winding is carried out by supplying, through a supply head, the continuous elongated element while the building drum 10 rotates and the supply head is moved parallel to the main axis "X-X" of the building drum 10 in one or more steps, for forming only one belt layer or a plurality of belt layers at 0°.

In the illustrated embodiment, the belt structure 6 is applied after the formation of the beads 5. In different embodiments, the belt structure 6 is applied before turning up each of the axially opposite terminal zones 21 around the respective annular anchoring structure 4.

In radially outer position relative to the belt structure 6, the tread band 7 and the sidewalls 8 are applied while the building drum 10 is still situated in the third configuration (figure 3e). In a manner similar to the application of the semi-finished product 19 in form of a continuous strip of the carcass ply 2, the tread band 7 in form of a continuous strip cut to size is circumferentially wound around the carcass sleeve and the belt structure 6. Preferably, the sidewalls 8 are already associated with the tread band 7 during the winding. Alternatively, the sidewalls 8 can be wound as separate elements, before or after the tread band 7. Opposite axial edges of the tread band 7 and/or of the sidewalls 8 are abutted against the carcass sleeve in a manner so as to follow the shape of the radially external surface 11 of the building drum 10.

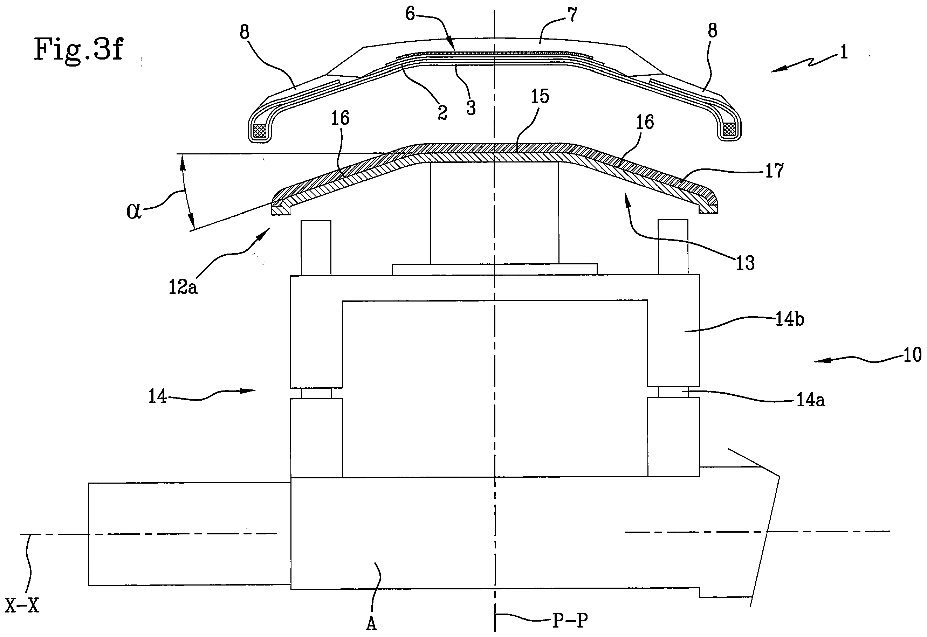

The green tyre 1 formed, whose shape is not yet final and only partially toroidal, is disengaged from the building drum 10 after having brought the building drum 10 itself back into the first contracted configuration (figures 3f and 2a) according to the rest diameter "Φ0". The green tyre 1 is inserted in a moulding and curing device, inside of which the final toroidal shape is conferred (of figure 1) also through an additional radial expansion. During such additional radial expansion, the reinforcement cords allow an elongation of the belt structure at 0° comprised between about 2% and 10%, which corresponds to an additional radial dilatation of the tyre up to the peripheral diameter of the finished, moulded and cured tyre (from 90%-98% obtained on the building drum to 100%).

## Claims

1. A process for building tyres for vehicle wheels, comprising:
winding at least one semi-finished product (19), in form of a continuous strip cut to size, circumferentially around a building drum (10) for forming a carcass sleeve;
conforming the carcass sleeve according to a substantially toroidal configuration;
fitting, around each of two axially opposite terminal zones (21) of the carcass sleeve,
an annular anchoring structure (4);
turning up each of the axially opposite terminal zones (21) around the respective annular anchoring structure (4);
**characterized in that** the toroidal conformation of the carcass sleeve is at least partly carried out before fitting the annular anchoring structures (4) and comprises: radially dilating only an axially central portion (20) of the carcass sleeve while the two axially opposite terminal zones (21) project free without the annular anchoring structures and approach symmetrically an equatorial plane (P-P) of the building drum (10) only due to the effect of the radial dilation.

2. A process as claimed in claim 1, wherein said semi-finished product (19) comprises wire-like reinforcement elements arranged substantially parallel to a central axis (X-X) of the building drum (10).

3. A process as claimed in claim 1, wherein the winding of the semi-finished product (19) comprises: applying only the axially central portion (20) of said semi-finished product (19) against a central circumferential portion (15) of a radially external surface (11) relative to the building drum (10) while opposite axial edges (22) of the semi-finished product (19) project substantially cantilevered, and wherein said axially central portion (20) of the semi-finished product (19) has a width (L1) comprised between about 1/5 and about 1/3 of the total width of said semi-finished product (19).

4. A process as claimed in claim 1, 2, or 3, wherein the radial dilation is obtained by radially expanding the building drum (10), the process comprising: abutting opposite lateral portions (23) of the carcass sleeve against lateral portions (16) of the radially external surface (11) relative to the building drum (10).

5. A process as claimed in one of the preceding claims, wherein, after said radial dilation, a peripheral diameter of the carcass sleeve is comprised between about 90% and about 98% of the peripheral diameter of the carcass structure in the moulded and cured tyre.

6. A process as claimed in one of the preceding claims, comprising: applying a belt structure (6) around the dilated carcass sleeve, wherein applying the belt structure (6) comprises: winding - according to adjacent or partly superimposed turns - at least one continuous elongated element comprising at least one reinforcement cord around the carcass sleeve for forming a belt structure at 0°, wherein the continuous elongated element comprises a plurality of reinforcement cords embedded in at least one layer made of elastomeric material or covered by a bonding layer, wherein each reinforcement cord has an extension comprised between about 6% and about 8% at a 45N load, and wherein the continuous elongated element is wound to form a plurality of layers.

7. A process as claimed in one of the preceding claims, comprising applying a belt structure (6) around the dilated carcass sleeve, wherein applying the belt structure (6) comprises: winding at least one auxiliary semi-finished product in form of a continuous strip cut to size circumferentially around the carcass sleeve, wherein said at least one auxiliary semi-finished product has inclined reinforcement cords relative to a longitudinal extension thereof, wherein the auxiliary semi-finished products are at least two superimposed auxiliary semi-finished products and they have inclined reinforcement cords in opposite directions for forming a cross-ply belt structure, the process comprising: applying only one axially central portion of said auxiliary semi-finished product against a central portion (15) of a radially external surface (11) relative to the building drum (10) while opposite axial edges of the auxiliary semi-finished product project cantilevered, the process comprising: abutting the opposite axial edges of said auxiliary semi-finished product against lateral portions (16) of the radially external surface (11) relative to the building drum (10).

8. A process as claimed in one of the preceding claims, comprising: applying a tread band (7) around the dilated carcass sleeve, wherein applying the tread band (7) comprises: winding said tread band (7) in form of a continuous strip cut to size circumferentially around the carcass sleeve, wherein said tread band (7) in form of a continuous strip cut to size integrates the sidewalls (8) of the tyre, the process comprising: abutting the opposite axial edges of said tread band (7) in form of a continuous strip cut to size against lateral portions (16) of the radially external surface (11) relative to the building drum (10).

9. A process as claimed in one of the preceding claims, comprising: moulding and curing the green tyre, imparting to said green tyre an additional radial expansion.

10. A process as claimed in the preceding claim when dependent on claim 6, wherein during the additional radial expansion, the belt structure (6) at 0° is subjected to a circumferential extension comprised between about 2% and about 10%.

11. An apparatus for building tyres for vehicle wheels, comprising:
a building drum (10) having a radially external surface (11) adapted to receive components of the tyre (1) lying thereon;
devices for radially configuring said building drum (10) according to at least one smaller application diameter (Φ1) and one larger application diameter (Φ2);
devices for applying at least one carcass ply (2) around the radially external surface (11) with the building drum (10) configured according to said smaller application diameter (Φ1);
devices for applying a belt structure (6) around the radially external surface (11) with the building drum (10) configured according to said larger application diameter (Φ2);
devices (24) for coaxially engaging, around each of two axially opposite terminal zones (21) of the carcass ply (2), an annular anchoring structure (4) with the building drum (10) configured according to said larger application diameter (Φ2);
devices (25) for turning up each of the two axially opposite terminal zones (21) around the respective annular anchoring structure (4);
**characterized in that** the apparatus is without mechanisms for locking the annular anchoring structures (4) operating synchronously with the devices for configuring the building drum (10) while configuring the building drum from a configuration according to said smaller application diameter (Φ1) to a configuration according to said larger application diameter (Φ2).

12. An apparatus as claimed in claim 11, wherein the radially external surface (11) of the building drum (10) is rigid, wherein, in a radial section of the building drum (10), the radially external surface (11) has a convex shape,, wherein the radially external surface (11) comprises: a central circumferential portion (15) and two lateral circumferential portions (16) extending from the central circumferential portion (15) and converging towards the main axis (X-X) of the building drum (10).

13. An apparatus as claimed in claim 12, wherein, in a radial section of the building drum (10), the central circumferential portion (15) is substantially parallel to the main axis (X-X) of the building drum (10), wherein, in a radial section of the building drum (10), the central circumferential portion (15) is flat, wherein, in a radial section of the building drum (10), each of the two lateral circumferential portions (16) is inclined towards the main axis (X-X) of the building drum (10), wherein, in a radial section of the building drum (10), each of the two lateral circumferential portions (16) is flat, and wherein, in a radial section of the building drum (10), the central circumferential portion (15) has an axial width (L1) comprised between about 1/3 and about 1/2 of a total axial width (L2) of the radially external surface (11), wherein, in a radial section of the building drum (10), each of the two lateral circumferential portions (16) is inclined relative to the central circumferential portion (15) by an angle (α) comprised between about 20° and about 45°.

14. An apparatus as claimed in claim 11, wherein the building drum (10) comprises a plurality of radially movable angular sectors (12a, 12b), carrying the radially external surface (11) and operatively connected to the devices for radially configuring the building drum (10), wherein said plurality of angular sectors (12a, 12b) comprises: main sectors (12a) having a greater circumferential extension and connection sectors (12b) having a smaller circumferential extension, wherein each of the connection sectors (12b) is interposed between two main sectors (12a) at least when said building drum (10) is configured radially according to the larger application diameter (Φ2), wherein the building drum (10) comprises a sheath (17) for covering the angular sectors (12a, 12b) covering said radially external surface (11).

15. An apparatus as claimed in claim 11, wherein the ratio between the smaller application diameter (Φ1) and the larger application diameter (Φ2) is comprised between about 0.8 and about 0.9, and wherein the building drum (10) can be radially configured according to a rest diameter (Φ0) smaller than the smaller application diameter (Φ1).

## Patentansprüche

1. Verfahren zur Herstellung von Reifen für Fahrzeugräder, das die folgenden Schritte umfasst:
Aufwickeln zumindest eines halbfertigen Produkts (19) in der Form eines abgelängten durchgehenden Streifens in Umfangsrichtung um eine Fertigungstrommel (10), um eine Karkassenhülle auszubilden;
Bringen der Karkassenhülle in Übereinstimmung mit einer im Wesentlichen ringförmigen Konfiguration;
Anpassen einer ringförmigen Verankerungsstruktur (4) um jede von zwei axial entgegengesetzten Endzonen (21) der Karkassenhülle;
Umstülpen einer jeden der axial entgegengesetzten Endzonen (21) um die jeweilige ringförmige Verankerungsstruktur (4);
**dadurch gekennzeichnet, dass** die ringförmige Ausformung der Karkassenhülle zumindest zum Teil vor dem Anpassen der ringförmigen Verankerungsstrukturen (4) erfolgt und umfasst: radiales Aufweiten nur eines axial zentralen Abschnitts (20) der Karkassenhülle, während die zwei axial entgegengesetzten Endzonen (21) ohne die ringförmigen Verankerungsstrukturen frei wegragen und sich symmetrisch einer Äquatorialebene (P-P) der Fertigungstrommel (10) nur aufgrund der Wirkung der radialen Aufweitung annähern.

2. Verfahren nach Anspruch 1, wobei das halbfertige Produkt (19) drahtähnliche Verstärkungselemente umfasst, die im Wesentlichen parallel zu einer Zentralachse (X-X) der Fertigungstrommel (10) sind.

3. Verfahren nach Anspruch 1, wobei das Aufwickeln des halbfertigen Produkts (19) umfasst: Anlegen des axial zentralen Abschnitts (20) des halbfertigen Produkts (19) gegen einen zentralen umlaufenden Abschnitt (15) einer radial äußeren Oberfläche (11) relativ zu der Fertigungstrommel (10), während entgegengesetzte Ränder (22) des halbfertigen Produkts (19) im Wesentlichen freitragend wegragen, und wobei der axial zentrale Abschnitt (20) des halbfertigen Produkts (19) eine Breite (L1) aufweist, die zwischen etwa 1/5 und etwa 1/3 der Gesamtbreite des halbfertigen Produkts (19) beträgt.

4. Verfahren nach Anspruch 1, 2, oder 3, wobei die radiale Aufweitung erzielt wird, indem die Fertigungstrommel (10) radial ausgedehnt wird, wobei das Verfahren umfasst: Anlegen entgegengesetzter seitlicher Abschnitte (23) der Karkassenhülle gegen seitliche Abschnitte (16) der radial äußeren Oberfläche (11) relativ zu der Fertigungstrommel (10).

5. Verfahren nach einem der vorhergehenden Ansprüche, wobei nach der radialen Aufweitung der periphere Durchmesser der Karkassenhülle zwischen etwa 90 % und etwa 98 % des peripheren Durchmessers der Karkassenstruktur in dem geformten und vulkanisierten Reifen beträgt.

6. Verfahren nach einem der vorhergehenden Ansprüche, umfassend: Anbringen einer Gürtelstruktur (6) um die aufgeweitete Karkassenhülle, wobei das Anbringen der Gürtelstruktur (6) umfasst: Aufwickeln zumindest eines durchgehenden länglichen Elements, in Übereinstimmung mit benachbarten oder teilweise überlappenden Windungen, umfassend zumindest einen Verstärkungskord um die Karkassenhülle, um eine Gürtelstruktur bei 0° zu bilden, wobei das durchgehende längliche Element eine Vielzahl von Verstärkungskorden umfasst, die in zumindest eine Lage aus Elastomermaterial eingebettet sind oder durch eine Bindungslage bedeckt sind, wobei jeder Verstärkungskord eine Streckung aufweist, die zwischen etwa 6 % und etwa 8 % bei einer Last von 45N aufweist, und wobei das durchgehende längliche Element gewickelt ist, um eine Vielzahl von Lagen zu bilden.

7. Verfahren nach einem der vorhergehenden Ansprüche, umfassend das Anbringen einer Gürtelstruktur (6) um die aufgeweitete Karkassenhülle, wobei das Anbringen der Gürtelstruktur (6) umfasst: Aufwickeln zumindest eines zusätzlichen halbfertigen Produkts in Form eines abgelängten durchgehenden Streifens in Umfangsrichtung um die Karkassenhülle, wobei das zumindest eine zusätzliche halbfertige Produkt relativ zu einer Längserstreckung desselben schräge Verstärkungskorde aufweist, wobei die zusätzlichen halbfertigen Produkte zumindest zwei überlagerte zusätzliche halbfertige Produkte sind, und schräge Verstärkungskorde in entgegengesetzten Richtungen aufweisen, um eine Querlagen-Gürtelstruktur zu bilden, wobei das Verfahren umfasst: Anbringen nur eines axial zentralen Abschnitts des zusätzlichen halbfertigen Produkts gegen einen zentralen Abschnitt (15) einer radial äußeren Oberfläche (11) relativ zu der Fertigungstrommel (10), während entgegengesetzte axiale Ränder des zusätzlichen halbfertigen Produkts freitragend wegragen, wobei das Verfahren umfasst: Anlegen der entgegengesetzten axialen Ränder des zusätzlichen halbfertigen Produkts gegen seitliche Abschnitte (16) der radial äußeren Oberfläche (11) relativ zu der Fertigungstrommel (10).

8. Verfahren nach einem der vorhergehenden Ansprüche, umfassend: Anbringen eines Laufflächenrings (7) um die aufgeweitete Karkassenhülle, wobei das Anbringen des Laufflächenrings (7) umfasst: Aufwickeln des Laufflächenrings (7) in Form eines abgelängten durchgehenden Streifens in Umfangsrichtung um die Karkassenhülle, wobei der Laufflächenring (7) in Form eines abgelängten durchgehenden Streifens die Seitenwände (8) des Reifens integriert, wobei das Verfahren umfasst: Anbringen der entgegengesetzten axialen Ränder des Laufflächenrings (7) in Form eines abgelängten durchgehenden Streifens gegen seitliche Abschnitte (16) der radial äußeren Oberfläche (11) relativ zu der Fertigungstrommel (10).

9. Verfahren nach einem der vorhergehenden Ansprüche, umfassend: Formen und Vulkanisieren des Rohreifens, wobei dem Rohreifen eine zusätzliche radiale Ausdehnung gegeben wird.

10. Verfahren nach dem vorhergehenden Anspruch, sofern abhängig von Anspruch 6, wobei während der zusätzlichen radialen Ausdehnung die Gürtelstruktur (6) bei 0° einer Umfangserstreckung zwischen etwa 2 % und etwa 10 % unterworfen wird.

11. Vorrichtung zur Herstellung von Reifen für Fahrzeugräder, wobei die Vorrichtung umfasst:
eine Fertigungstrommel (10) mit einer radial äußeren Oberfläche (11), die dazu geeignet ist, Komponenten des Reifens (1) daran anliegend aufzunehmen;
Einrichtungen zum radialen Konfigurieren der Fertigungstrommel (10) in Übereinstimmung mit zumindest einem kleineren Anbringungsdurchmesser (ϕ1) und einem größeren Anbringungsdurchmesser (ϕ2);
Einrichtungen zum Anbringen zumindest einer Karkassenlage (2) um die radial äußere Oberfläche (11), wobei die Fertigungstrommel (10) in Übereinstimmung mit dem kleineren Anbringungsdurchmesser (ϕ1) konfiguriert ist;
Einrichtungen zum Anbringen einer Gürtelstruktur (6) um die radial äußere Oberfläche (11), wobei die Fertigungstrommel (10) in Übereinstimmung mit dem kleineren Anbringungsdurchmesser (ϕ2) konfiguriert ist;
Einrichtungen (24) zum koaxialen Ineingriffbringen einer ringförmigen Verankerungsstruktur (4) um jede der zwei axial entgegengesetzten Endzonen (21) der Karkassenlage (2), wobei die Fertigungstrommel (10) in Übereinstimmung mit dem größeren Anbringungsdurchmesser (ϕ2) konfiguriert ist; Einrichtungen (25) zum Umstülpen einer jeden der zwei axial entgegengesetzten Endzonen (21) um die jeweilige ringförmige Verankerungsstruktur (4);
**dadurch gekennzeichnet, dass** die Vorrichtung keine Mechanismen zum Festlegen der ringförmigen Verankerungsstrukturen (4) aufweisen, die synchron mit den Einrichtungen zum Konfigurieren der Fertigungstrommel (10) arbeiten, während die Fertigungstrommel aus einer Konfiguration in Übereinstimmung mit dem kleineren Anbringungsdurchmesser (ϕ1) in eine Konfiguration in Übereinstimmung mit dem größeren Anbringungsdurchmesser (ϕ2) konfiguriert wird.

12. Vorrichtung nach Anspruch 11, wobei die radial äußere Oberfläche (11) der Fertigungstrommel (10) steif ist, wobei in einem radialen Abschnitt der Fertigungstrommel (10) die radial äußere Oberfläche (11) eine konvexe Gestalt aufweist, wobei die radial äußere Oberfläche (11) umfasst: einen zentralen umlaufenden Abschnitt (15) und zwei seitliche umlaufende Abschnitte (16), die sich von dem zentralen umlaufenden Abschnitt (15) weg erstrecken und zu der Hauptachse (X-X) der Fertigungstrommel (10) hin zusammenlaufen.

13. Vorrichtung nach Anspruch 12, wobei in einem radialen Abschnitt der Fertigungstrommel (10) der zentrale umlaufende Abschnitt (15) im Wesentlichen parallel zu der Hauptachse (X-X) der Fertigungstrommel (10) ist, wobei in einem radialen Abschnitt der Fertigungstrommel (10) der zentrale umlaufende Abschnitt (15) flach ist, wobei in einem radialen Abschnitt der Fertigungstrommel (10) jeder der zwei seitlichen umlaufenden Abschnitte (16) schräg zu der Hauptachse (X-X) der Fertigungstrommel (10) ist, wobei in einem radialen Abschnitt der Fertigungstrommel (10) jeder der zwei seitlichen umlaufenden Abschnitte (16) flach ist, und wobei in einem radialen Abschnitt der Fertigungstrommel (10) der zentrale umlaufende Abschnitt (15) eine axiale Breite (L1) aufweist, die zwischen etwa 1/3 und etwa 1/2 der gesamten axialen Breite (L2) der radial äußeren Oberfläche (11) beträgt, wobei in einem radialen Abschnitt der Fertigungstrommel (10) jeder der zwei seitlichen umlaufenden Abschnitte (16) schräg relativ zu dem zentralen umlaufenden Abschnitt (15) steht, mit einem Winkel (α) zwischen etwa 20° und etwa 45°.

14. Vorrichtung nach Anspruch 11, wobei die Fertigungstrommel (10) eine Vielzahl von radial beweglichen Winkelsektoren (12a, 12b) umfasst, die die radial äußere Oberfläche (11) trägt und mit den Einrichtungen zum radialen Konfigurieren der Fertigungstrommel (10) wirkverbunden ist, wobei die Vielzahl von Winkelsektoren (12a, 12b) umfasst: Hauptsektoren (12a) mit einer größeren Umfangserstreckung und Verbindungssektoren (12b) mit einer kleineren Umfangserstreckung, wobei jeder der Verbindungssektoren (12b) zwischen zwei Hauptsektoren (12a) angeordnet ist, zumindest wenn die Fertigungstrommel (10) radial in Übereinstimmung mit dem größeren Anbringungsdurchmesser (ϕ2) konfiguriert ist, wobei die Fertigungstrommel (10) eine Hülle (17) zum Abdecken der Winkelsektoren (12a, 12b) aufweist, die die radial äußere Oberfläche (11) abdecken.

15. Vorrichtung nach Anspruch 11, wobei das Verhältnis zwischen dem kleineren Anbringungsdurchmesser (ϕ1) und dem größeren Anbringungsdurchmesser (ϕ2) zwischen etwa 0,8 und etwa 0,9 liegt, und wobei die Fertigungstrommel (10) radial in Übereinstimmung mit einem Ruhedurchmesser (ϕ0) konfiguriert werden kann, der kleiner ist als der kleinere Anbringungsdurchmesser (ϕ1).

## Revendications

1. Procédé de construction de pneus pour roues de véhicule, comprenant le fait :
d'enrouler au moins un produit semi-fini (19), sous la forme d'une bande continue découpée à dimension, de manière circonférentielle autour d'un tambour de construction (10) pour former un manchon de carcasse ;
de conformer le manchon de carcasse selon une configuration essentiellement toroïdale ;
d'ajuster, autour de chacune des deux zones terminales axialement opposées (21) du manchon de carcasse, une structure d'ancrage annulaire (4) ;
de tourner vers le haut chacune des zones terminales axialement opposées (21) autour de la structure d'ancrage annulaire respective (4) ;
**caractérisé en ce que** la conformation toroïdale du manchon de carcasse est réalisée au moins en partie avant l'ajustement des structures d'ancrage annulaires (4) et comprend le fait : de dilater radialement uniquement une partie axialement centrale (20) du manchon de carcasse pendant que les deux zones terminales opposées (21) font saillie librement sans les structures d'ancrage annulaires et s'approchent symétriquement d'un plan équatorial (P-P) du tambour de construction (10) uniquement en raison de l'effet de la dilatation radiale.

2. Procédé tel que revendiqué dans la revendication 1, dans lequel ledit produit semi-fini (19) comprend des éléments de renforcement de type fil agencés essentiellement parallèlement à un axe central (X-X) du tambour de construction (10).

3. Procédé tel que revendiqué dans la revendication 1, dans lequel l'enroulement du produit semi-fini (19) comprend le fait : d'appliquer uniquement la partie axialement centrale (20) dudit produit semi-fini (19) contre une partie circonférentielle centrale (15) d'une surface radialement externe (11) par rapport au tambour de construction (10) pendant que des bords axiaux opposés (22) du produit semi-fini (19) font saillie essentiellement en porte-à-faux, et dans lequel ladite partie axialement centrale (20) du produit semi-fini (19) a une largeur (L1) comprise entre environ 1/5 et environ 1/3 de la largeur totale dudit produit semi-fini (19).

4. Procédé tel que revendiqué dans la revendication 1, 2 ou 3, dans lequel la dilatation radiale est obtenue en effectuant une expansion radiale du tambour de construction (10), le procédé comprenant le fait : de mettre en butée des parties latérales opposées (23) du manchon de carcasse contre des parties latérales (16) de la surface radialement externe (11) par rapport au tambour de construction (10).

5. Procédé tel que revendiqué dans l'une des revendications précédentes, dans lequel, après ladite dilatation radiale, un diamètre périphérique du manchon de carcasse est compris entre environ 90% et environ 98% du diamètre périphérique de la structure de carcasse dans le pneu moulé et durci.

6. Procédé tel que revendiqué dans l'une des revendications précédentes, comprenant le fait :
d'appliquer une structure de ceinture (6) autour du manchon de carcasse dilaté, où l'application de la structure de ceinture (6) comprend le fait : d'enrouler - selon des spires adjacentes ou partiellement superposées - au moins un élément allongé continu comprenant au moins un câblé de renforcement autour du manchon de carcasse pour former une structure de ceinture à 0°, où l'élément allongé continu comprend une pluralité de câblés de renforcement incorporés dans au moins une couche réalisée en matériau élastomère ou recouverte d'une couche de liaison, où chaque câblé de renforcement a une extension comprise entre environ 6% et environ 8% à une charge de 45 N, et où l'élément allongé continu est enroulé pour former une pluralité de couches.

7. Procédé tel que revendiqué dans l'une des revendications précédentes, comprenant le fait d'appliquer une structure de ceinture (6) autour du manchon de carcasse dilaté, où l'application de la structure de ceinture (6) comprend le fait : d'enrouler au moins un produit semi-fini auxiliaire sous la forme d'une bande continue découpée à dimension de manière circonférentielle autour du manchon de carcasse, où ledit au moins un produit semi-fini auxiliaire a des câblés de renforcement inclinés par rapport à une extension longitudinale de ceux-ci, où les produits semi-finis auxiliaires sont au moins deux produits semi-finis auxiliaires superposés et ils ont des câblés de renforcement inclinés dans des directions opposées pour former une structure de ceinture à plis croisés, le procédé comprenant le fait : d'appliquer uniquement une partie axialement centrale dudit produit semi-fini auxiliaire contre une partie centrale (15) d'une surface radialement externe (11) par rapport au tambour de construction (10), pendant que des bords axiaux opposés du produit semi-fini auxiliaire font saillie en porte-à-faux, le procédé comprenant le fait : de mettre en butée les bords axiaux opposés dudit produit semi-fini auxiliaire contre des parties latérales (16) de la surface radialement externe (11) par rapport au tambour de construction (10).

8. Procédé tel que revendiqué dans l'une des revendications précédentes, comprenant le fait :
d'appliquer une bande de roulement (7) autour du manchon de carcasse dilaté, où l'application de la bande de roulement (7) comprend le fait : d'enrouler ladite bande de roulement (7) sous la forme d'une bande continue découpée à dimension de manière circonférentielle autour du manchon de carcasse, où ladite bande de roulement (7) sous la forme d'une bande continue découpée à dimension intègre les parois latérales (8) du pneu, le procédé comprenant le fait : de mettre en butée les bords axiaux opposés de ladite bande de roulement (7) sous la forme d'une bande continue découpée à dimension contre des parties latérales (16) de la surface radialement externe (11) par rapport au tambour de construction (10).

9. Procédé tel que revendiqué dans l'une des revendications précédentes, comprenant le fait : de mouler et de durcir le pneu cru, conférant audit pneu cru une expansion radiale supplémentaire.

10. Procédé tel que revendiqué dans la revendication précédente lorsqu'elle dépend de la revendication 6, dans lequel, pendant l'expansion radiale supplémentaire, la structure de ceinture (6) à 0° est soumise à une extension circonférentielle comprise entre environ 2% et environ 10%.

11. Appareil pour une construction de pneus pour roues de véhicule, comprenant :
un tambour de construction (10) ayant une surface radialement externe (11) adaptée pour recevoir des composants du pneu (1) reposant sur celui-ci ;
des dispositifs pour configurer radialement ledit tambour de construction (10) selon au moins un diamètre d'application inférieur (φ1) et un diamètre d'application supérieur (φ2) ;
des dispositifs pour appliquer au moins un pli de carcasse (2) autour de la surface radialement externe (11) avec le tambour de construction (10) configuré selon ledit diamètre d'application inférieur (φ1) ;
des dispositifs pour appliquer une structure de ceinture (6) autour de la surface radialement externe (11) avec le tambour de construction (10) configuré selon ledit diamètre d'application supérieur (φ2) ;
des dispositifs (24) pour s'engager de manière coaxiale, autour de chacune des deux zones terminales axialement opposées (21) du pli de carcasse (2), avec une structure d'ancrage annulaire (4) avec le tambour de construction (10) configuré selon ledit diamètre d'application supérieur (φ2) ;
des dispositifs (25) pour tourner vers le haut chacune des deux zones terminales axialement opposées (21) autour de la structure d'ancrage annulaire respective (4) ;
**caractérisé en ce que** l'appareil est dépourvu de mécanismes pour le verrouillage des structures d'ancrage annulaires (4) fonctionnant en synchronisme avec les dispositifs pour configurer le tambour de construction (10) lors de la configuration du tambour de construction d'une configuration selon ledit diamètre d'application inférieur (φ1) à une configuration selon ledit diamètre d'application supérieur (φ2).

12. Appareil tel que revendiqué dans la revendication 11, dans lequel la surface radialement externe (11) du tambour de construction (10) est rigide, où, dans une section radiale du tambour de construction (10), la surface radialement externe (11) a une forme convexe, où la surface radialement externe (11) comprend : une partie circonférentielle centrale (15) et deux parties circonférentielles latérales (16) s'étendant depuis la partie circonférentielle centrale (15) et convergeant vers l'axe principal (X-X) du tambour de construction (10).

13. Appareil tel que revendiqué dans la revendication 12, dans lequel, dans une section radiale du tambour de construction (10), la partie circonférentielle centrale (15) est essentiellement parallèle à l'axe principal (X-X) du tambour de construction (10), où, dans une section radiale du tambour de construction (10), la partie circonférentielle centrale (15) est plate, où, dans une section radiale du tambour de construction (10), chacune des deux parties circonférentielles latérales (16) est inclinée vers l'axe principal (X-X) du tambour de construction (10), où, dans une section radiale du tambour de construction (10), chacune des deux parties circonférentielles latérales (16) est plate, et où, dans une section radiale du tambour de construction (10), la partie circonférentielle centrale (15) a une largeur axiale (L1) comprise entre environ 1/3 et environ 1/2 d'une largeur axiale totale (L2) de la surface radialement externe (11), où, dans une section radiale du tambour de construction (10), chacune des deux parties circonférentielles latérales (16) est inclinée par rapport à la partie circonférentielle centrale (15) d'un angle (α) compris entre environ 20° et environ 45°.

14. Appareil tel que revendiqué dans la revendication 11, dans lequel le tambour de construction (10) comprend une pluralité de secteurs angulaires radialement mobiles (12a, 12b), portant la surface radialement externe (11) et reliés de manière fonctionnelle aux dispositifs pour configurer radialement le tambour de construction (10), où ladite pluralité de secteurs angulaires (12a, 12b) comprend :
des secteurs principaux (12a) ayant une extension circonférentielle plus grande et des secteurs de liaison (12b) ayant une extension circonférentielle plus petite, où chacun des secteurs de liaison (12b) est interposé entre deux secteurs principaux (12a) au moins lorsque ledit tambour de construction (10) est configuré radialement selon le diamètre d'application supérieur (φ2), où le tambour de construction (10) comprend une gaine (17) pour recouvrir les secteurs angulaires (12a, 12b) recouvrant ladite surface radialement externe (11).

15. Appareil tel que revendiqué dans la revendication 11, dans lequel le rapport entre le diamètre d'application inférieur (φ1) et le diamètre d'application supérieur (φ2) est compris entre environ 0,8 et environ 0,9, et où le tambour de construction (10) peut être radialement configuré selon un diamètre de repos (φ0) plus petit que le diamètre d'application inférieur (φ1).
